# EUROPÄISCHE PATENTSCHRIFT

(11) **EP 2 759 736 B1**
(45) Veröffentlichungstag und Bekanntmachung des Hinweises auf die Patenterteilung: **16.09.2015**
(21) Anmeldenummer: 13153154.3
(22) Anmeldetag: 29.01.2013
(51) Int. Cl.: F16F 15/06, F16F 1/12, F16F 3/02

(54) **Eine Schraubenfeder umfassender Schwingungsisolator**
Vibration insulator comprising a helical spring
Isolateur de vibrations comprenant un ressort cylindrique

(43) Veröffentlichungstag der Anmeldung: 30.07.2014
(73) Patentinhaber: Integrated Dynamics Engineering GmbH, 65479 Raunheim (DE)
(72) Erfinder: Evers, Arndt, 65375 Oestrich-Winkel (DE)
(74) Vertreter: Blumbach Zinngrebe

(56) Entgegenhaltungen:
- JP-A- 2001 027 280

## Beschreibung

### Gebiet der Erfindung

Die Erfindung betrifft einen Schwingungsisolator, welcher eine Schraubenfeder umfasst sowie ein Schwingungsisolationssystem. Insbesondere betrifft die Erfindung ein Schwingungsisolationssystem, welches zur schwingungsisolierten Lagerung von Maschinen, insbesondere auf dem Gebiet der Halbleiterindustrie, verwendet wird.

### Hintergrund der Erfindung

Schwingungsisolationssysteme, welche eine zumeist als Stahlfeder ausgebildete Schraubenfeder umfassen, sind bekannt. Bei einem derartigen System wird eine vom Boden zu isolierende Last auf drei oder mehr Schwingungsisolatoren gelagert, welche eine Schraubenfeder umfassen, die zumindest in einer vertikalen Richtung wirksam ist. Eine Lagerung auf einem Isolator, der eine Schraubenfeder umfasst, ist aus dem Dokument JP 2001 0027280 A bekannt.

Derartige Schraubenfedern ermöglichen auf sehr einfache Weise eine passive Schwingungsisolation, insbesondere auch von recht schweren Bauelementen.

Oberhalb der Eigenfrequenz des Feder-Masse-Systems wird eine Schwingungsisolation erreicht.

Die Isolationswirkung derartiger Schwingungsisolationssysteme, insbesondere wenn diese zur Lagerung von empfindlichen Maschinen in der Halbleiterindustrie, wie beispielsweise Lithografiegeräten verwendet werden, kann verbessert werden indem das Schwingungsisolationssystem als aktives Schwingungsisolationssystem ausgebildet wird.

Bei einem derartigen aktiven Schwingungsisolationssystem sind Sensoren auf der zu isolierenden Last und/oder dem Boden angeordnet und es wird über eine Regelschleife zumindest ein Aktor angesteuert, welcher Schwingungen aktiv entgegen wirkt. Als Aktor werden insbesondere berührungslos arbeitende Kraftaktoren, insbesondere basierend auf Lorentz-Prinzip, verwendet.

Die verwendeten mechanischen Federsysteme werden auf das Gewicht der zu lagernden Last ausgelegt. Dies ist notwendig, da sich eine mechanische Feder im Belastungsgrenzbereich nicht mehr linear verhält und beschädigt werden kann.

Da die Auslenkung einer Schraubenfeder sich im Wesentlichen linear zur aufgebrachten Kraft verhält, versteht es sich, dass sich die Höhe der schwingungsisoliert gelagerten Last mit deren Gewicht ändert.

Um Variationen der isoliert gelagerten Last oder eine ungleichmäßige Kraftverteilung zu kompensieren, ist es aus der Praxis bekannt, ein derartiges mechanisches Federsystem mit einer Schraubenfeder mit einer Höhekorrektur zu versehen.

Eine derartige Höhenkorrektur kann beispielsweise über einen höhenverstellbaren Federteller auf recht einfache Weise realisiert werden.

Eine Servicekraft stellt das Schwingungsisolationssystem in Ruhelage ein.

Das Einstellen erfolgt beispielsweise mittels eines als Mutter ausgebildeten Stellelementes, welches auf einer Gewindestange geführt ist.

Es hat sich nun aber gezeigt, dass beim mechanischen Höheneinstellen Drehmomente in dem mechanischen Federsystem erzeugt werden können, welche eine horizontale Kraft zur Folge haben können. Diese horizontale Kraftkomponente führt in aller Regel zu einer horizontalen Verschiebung der schwingungsisoliert gelagerten Last, welche unerwünscht ist.

Besonders nachteilig ist eine horizontale Verschiebung bei aktiven Schwingungsisolationssystemen, da hierdurch die sich gegenüber liegenden Komponenten von berührungslos arbeitenden Aktoren zueinander verschoben werden. So kann es beispielsweise bei einer Lorentzspule zu einer Berührung der Tauchspule mit dem Permanentmagneten kommen, beziehungsweise es kommt zumindest dazu, dass die Größe des Luftspaltes zwischen Tauchspule und Permanentmagnet nicht mehr im gewünschten Bereich liegt.

Dies macht es erforderlich, dass nach der Höheneinstellung das Schwingungsisolationssystem auf aufwendige Weise auch in horizontaler Richtung justiert werden muss.

### Aufgabe der Erfindung

Der Erfindung liegt demgegenüber die Aufgabe zu Grunde, die genannten Nachteile des Standes der Technik zu reduzieren.

Es ist insbesondere eine Aufgabe der Erfindung ein höhenverstellbares Schwingungsisolationssystem mit Schraubenfedern bereit zu stellen, bei welchem eine Höhenverstellung möglich ist ohne die schwingungsisoliert gelagerte Last in horizontaler Richtung zu verschieben.

### Zusammenfassung der Erfindung

Die Aufgabe der Erfindung wird bereits durch einen Schwingungsisolator nach dem unabhängigen Anspruch gelöst.

Bevorzugte Ausführungsformen und Weiterbildungen der Erfindung sind Gegenstand der Unteransprüche.

Die Erfindung betrifft einen Schwingungsisolator. Dieser ist insbesondere zur Aufnahme von schwingungsisoliert gelagerten Geräten, wie sie in der Halbleiterindustrie Verwendung findet, ausgebildet. Es handelt sich also um einen Schwingungsisolator, welcher in stationär aufgestellten Schwingungsisolationssystemen verwendet wird.

Der Schwingungsisolator umfasst im eingebauten Zustand eine Basis. Diese Basis ist üblicherweise als Rahmen ausgebildet, welcher auf dem Boden gestellt wird. Es versteht sich aber, dass es denkbar ist, dass der Schwingungsisolator direkt auf den Boden gesetzt wird, dass also der Boden als Basis dient.

Mittels einer Schraubenfeder, welche insbesondere als Stahlfeder ausgebildet ist, wird eine schwingungsisoliert zu lagernde Last über eine zumindest in vertikaler Richtung wirksame Schraubenfeder schwingungsisoliert gelagert.

Hierzu ist die Schraubenfeder zwischen der Basis und der zu isolierenden Last angeordnet. Unter einer Schraubenfeder wird ein gewundenes Federelement verstanden, welches als mechanische Feder zumindest in Richtung der Haupterstreckungsrichtung der Feder wirksam ist. Schraubenfedern sind typischerweise als zylindrisch gewickelter Federdraht ausgebildet. Es versteht sich, dass im Sinne der Erfindung auch andere Bauformen einer derartigen Feder verwendet werden können.

Die schwingungsisoliert gelagerte Last umfasst typischerweise einen Rahmen oder Tisch, der der Aufnahme schwingungsisoliert gelagerter Geräte dient.

Der Schwingungsisolator ist über ein Stellelement höhenverstellbar ausgebildet. Als Stellelement kann insbesondere eine auf einem Gewindestab angeordnete Mutter verwendet werden.

Insbesondere kann über eine Mutter ein Federteller, vorzugsweise ein unterer Federteller, höhenverstellbar ausgebildet sein.

Gemäß der Erfindung ist die Schraubenfeder in einer horizontalen Richtung steif an die Basis oder an die zu isolierende Last angebunden.

Unter "horizontal" und "vertikal" im Sinne der Erfindung wird die Position des Schwingungsisolators in bestimmungsgemäß eingebautem Zustand verstanden.

Unter einer steifen Anbindung in horizontaler Richtung im Sinne der Erfindung wird verstanden, dass die Steifigkeit in horizontaler Richtung gegenüber der Steifigkeit in vertikaler Richtung wesentlich größer ist. Insbesondere ist die Steifigkeit in horizontaler Richtung mindestens zwanzigmal höher als die Steifigkeit in vertikaler Richtung.

Da nunmehr durch die Schraubenfeder keine nennenswerte Schwingungsisolation in horizontaler Richtung mehr bereit gestellt werden kann, ist vorgesehen, dass der Schwingungsisolator ein weiteres Bauelement zur Erzeugung einer horizontalen Schwingungsisolation umfasst.

Als weiteres Bauelement kann insbesondere ein Biegestab oder ein Knickpendel verwendet werden.

Insbesondere die Verwendung eines Biegestabes ermöglicht bei identischer Schraubenfeder eine sehr einfache Anpassung der horizontalen Steifigkeit durch Austausch des Knickpendels.

Bei einer Weiterbildung der Erfindung ist der Biegestab oder das Knickpendel an einer in die Schraubenfeder hinein ragenden Verlängerung befestigt.

Der Kopplungspunkt zwischen Biegestab beziehungsweise Knickpendel und Schraubenfeder wird also in die Schraubenfeder verlegt. Vorzugsweise ragt die Verlängerung zumindest ein Drittel der Länge der Schraubenfeder in die Schraubenfeder hinein.

So kann auf einfach Weise eine niedrige horizontale Steifigkeit auf einem kleinen Bauraum erreicht werden. Gleichzeitig wird durch eine Verlagerung des Befestigungspunktes nach unten die Neigung des Systems zum Verkippen reduziert.

Bei einer bevorzugten Ausführungsform der Erfindung ist die Schraubenfeder mittels zumindest einer Blattfeder in einer horizontalen Richtung steif an die Basis oder die zu isolierende Last angebunden.

Die Verwendung einer horizontal angeordneten Blattfeder ermöglicht es, auf sehr einfache Weise ein Bauelement auszubilden, welches in horizontaler Richtung eine äußert hohe Steifigkeit aufweist, in vertikaler Richtung aber mit einer niedrigen Steifigkeit bereit gestellt werden kann.

Es versteht sich, dass auch die Verwendung einer Blattfeder eine zusätzliche vertikale Steifigkeit nach sich zieht.

Dies ist aber insofern sogar von Vorteil, als dass die Blattfeder relativ einfach ausgetauscht werden kann, so dass über die zusätzliche vertikale Steifigkeit der Blattfeder die Eigenfrequenz des Schwingungsisolators auf einfache Weise auf den jeweiligen Einsatzort angepasst werden kann.

So kann ein Schwingungsisolationssystem bereit gestellt werden, bei dem die einzelnen Isolatoren eine identisch ausgebildete Schraubenfeder umfassen, aber aufgrund unterschiedlich ausgebildeter Blattfedern (vertikal) und/oder unterschiedlich ausgebildetem Biegestab oder Knickpendel (horizontal) eine unterschiedliche Steifigkeit aufweisen.

Über eine Anpassung der Steifigkeit kann insbesondere die Eigenfrequenz der einzelnen Schwingungsisolatoren derart angepasst werden, dass alle Schwingungsisolatoren eine im Wesentlichen gleiche Eigenfrequenz aufweisen. Unterschiedliche Eigenfrequenzen den einzelnen Isolatoren sind möglichst zu vermeiden, da diese zu einer Torkelbewegung der zu isolierenden Last führen können. Ist nun beispielsweise aufgrund einer nicht symmetrischen Schwerpunktlage die Last an einem Schwingungsisolator höher, kann dessen Steifigkeit entsprechend erhöht werden, um dessen Eigenfrequenz an die anderen Schwingungsisolatoren anzupassen.

Weiter kann über die Blattfeder auch die vertikale Steifigkeit auf sehr einfache Weise dem jeweiligen Einsatzort angepasst werden, ohne dass die Schraubenfeder ausgetauscht werden muss.

Vorzugsweise ist die Schraubenfeder mittels zumindest zwei in horizontaler Richtung voneinander beabstandeter Blattfedern steif an die Basis oder zu isolierende Last angebunden. So wird ein Verkippen und damit ein mögliches Herabsetzen der horizontalen Steifigkeit vermieden.

Bei einer bevorzugten Ausführungsform der Erfindung ist die Schraubenfeder in einem Gehäuse angeordnet, welches seinerseits, insbesondere über eine Blattfeder, an die Basis oder an die zu isolierende Last angebunden ist, wobei das Gehäuse nur in vertikaler, nicht aber in horizontaler Richtung, gegenüber der Basis oder zu isolierenden Last beweglich ist.

Zur einfachen Ausgestaltung des Schwingungsisolators kann das Gehäuse einen Federteller umfassen.

Bei einer Weiterbildung der Erfindung umfasst der Schwingungsisolator ein Gehäuse, in welchem die Schraubenfeder angeordnet ist, sowie ein Außengehäuse, wobei das Außengehäuse in horizontaler Richtung steif an das Gehäuse angebunden ist und mit der Basis oder zu isolierenden Last verbunden ist.

Das Gehäuse, welches die Feder umfasst, und das Außengehäuse sind mithin nur in einer vertikalen Richtung gegeneinander beweglich ausgebildet.

Bei einer bevorzugten Ausführungsform der Erfindung umfasst das Außengehäuse zumindest eine Aussparung, über welche das Stellelement zugänglich ist.

Der erfindungsgemäße Schwingungsisolator dient insbesondere zur Verwendung in aktiven Schwingungsisolationssystemen, also Schwingungsisolationssystemen, welche zumindest einen Sensor zur Erfassung von Schwingungen sowie zumindest einen Aktor zur aktiven Schwingungsisolation umfassen.

Der Aktor ist insbesondere als linearer Magnetaktor ausgebildet.

Insbesondere werden nach dem Lorentz-prinzip arbeitende Aktoren verwendet, welche eine Tauchspule umfassen, die zwischen Magnete umfassenden Flügeln angeordnet ist.

### Beschreibung der Zeichnungen

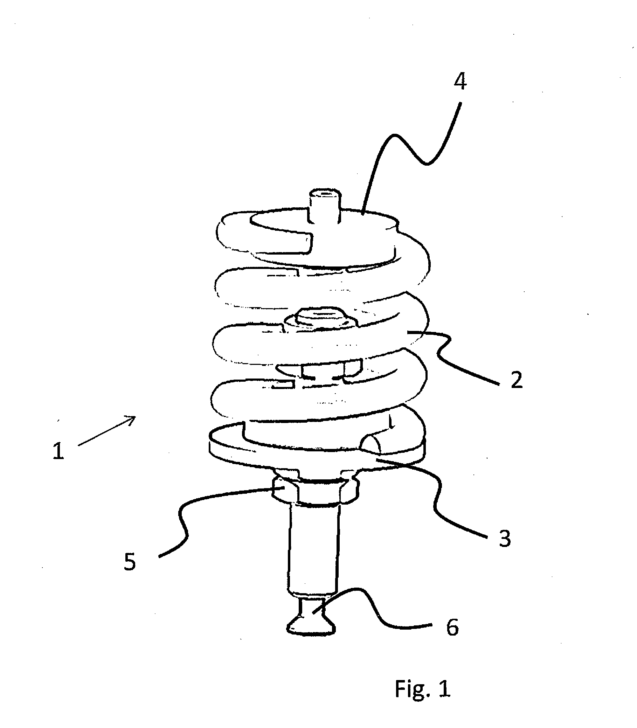

Die Erfindung soll im folgenden Bezug nehmend auf ein in den Zeichnungen Fig. 1 bis Fig. 5 schematisch dargestelltes Ausführungsbeispiel näher erläutert werden.

Fig. 1 zeigt, schematisch dargestellt, wesentliche Komponenten eines Schwingungsisolators 1, welcher eine Schraubenfeder 2 umfasst.

Die Schraubenfeder 2 ist mit einem unteren Federteller 3 sowie einen oberen Federteller 4 verbunden und kann so über die Federteller an der schwingungsisoliert gelagerten Last (nicht dargestellt) sowie an der Basis (nicht dargestellt) befestigt werden.

Der untere Federteller 3 ist über ein Stellelement 5, in diesem Ausführungsbeispiel als auf einem Gewindestab angeordnete Mutter ausgebildet, in vertikaler Richtung verstellbar. Über ein in diesem Ausführungsbeispiel als Schraube ausgebildetes unteres Befestigungselement 6 wird der untere Federteller 3 an der Basis befestigt.

Die schwingungsisoliert gelagerte Last ist sodann über die Schraubenfeder 2 mit der Basis verbunden.

Es versteht sich, dass so im eingebauten Zustand eine Schwingungsisolation in vertikaler Richtung, also entlang der Haupterstreckungsrichtung der Schraubenfeder 2 erreicht wird.

Es versteht sich gleichzeitig aber auch, dass die Schraubenfeder 2 auch in horizontaler Richtung wirksam ist.

Sind nun keine zusätzlichen Bauelemente vorhanden, welche eine Verschiebung von unterem 3 und oberen Federteller 4 in horizontaler Richtung verhindern, kommt es in der Regel bei einer Betätigung des Stellelements 5 zu einer horizontalen Verschiebung, da beim Drehen an dem Stellelement 5 in aller Regel ein Drehmoment auf den unteren Federteller 3 übertragen wird und es so zu einer Kraft in horizontaler Richtung kommt.

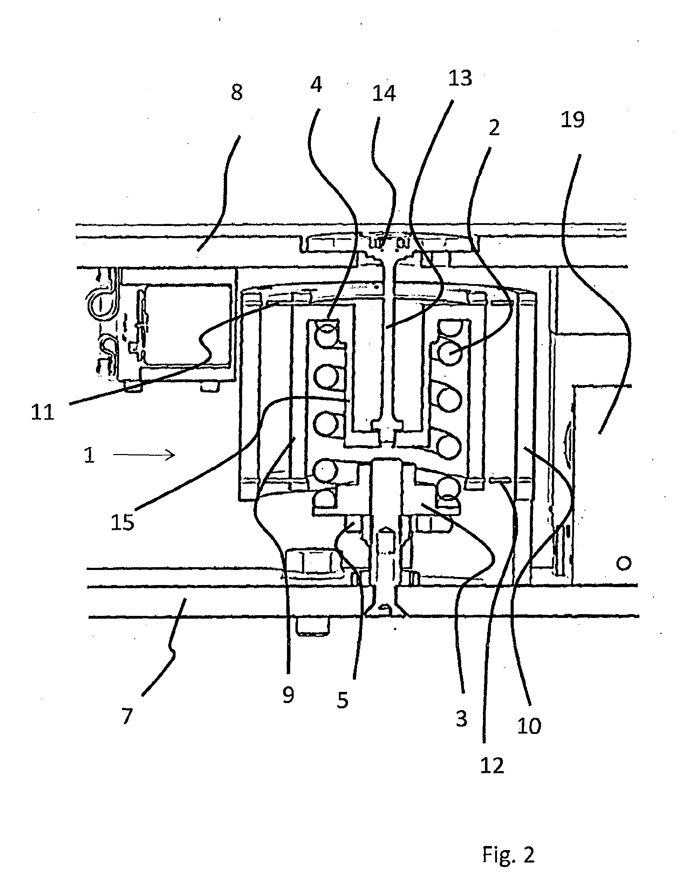

Fig. 2 zeigt nunmehr den Schwingungsisolator 1 im eingebauten Zustand und es sind nunmehr auch die weiteren Bauelemente dargestellt, mittels der die Schraubenfeder 2 steif an die Basis oder an die zu isolierende Last angebunden ist.

Hierzu ist die Schraubenfeder 2 in einem Gehäuse 9 angeordnet.

Das Gehäuse 9, welches auch als Innengehäuse betrachtet werden kann, ist seinerseits über vertikal voneinander beabstandete Blattfedern 11, 12 mit einem Außengehäuse 10 verbunden, welches an der Basis 7 befestigt ist.

Aufgrund der hohen Steifigkeit der Blattfedern 11, 12 in horizontaler Richtung ist das Gehäuse 9 nur in horizontaler Richtung gegenüber dem Außengehäuse 10 beweglich.

Die Blattfedern 10, 11 können über den gesamten Umfang des Gehäuses oder segmentartig angeordnet sein.

Das innere Gehäuse 9 bildet gleichzeitig den oberen Federteller 4.

Ein unterer höhenverstellbarer Federteller 3 ist mit der Basis 7 verbunden.

Über die Schraubenfeder 2 ist nunmehr nur noch eine Schwingungsisolation in vertikaler Richtung möglich.

Zur Bereitstellung einer horizontalen Schwingungsisolation ist als zusätzliches Bauelement ein Biegestab 13 vorgesehen, welcher mit dem Gehäuse 9 sowie über ein oberes Befestigungselement 14 mit der schwingungsisoliert zu lagernden Last 8 verbunden ist.

Zur Erzielung einer niedrigen horizontalen Steifigkeit ragt der Biegestab in eine Verlängerung 15 des Gehäuses 9 hinein, die sich durch die Schraubenfeder 2 erstreckt.

Hierdurch wird der Kopplungspunkt des Biegestabes 13 mit dem Gehäuse 9 nach unten verlegt, was gleichzeitig die Kippneigung des Systems reduziert.

Es handelt sich um ein aktives Schwingungsisolationssystem, welches neben Sensoren auch Aktoren 19 zur aktiven Schwingungsisolation umfasst.

Wird nunmehr über das Stellelement 5 die Höhe der schwingungsisoliert gelagerten Last 8 eingestellt, kommt es aufgrund der steifen Anbindung der Schraubenfeder an die Basis 7 nicht zu einer horizontalen Verschiebung der Last 8 und es kann auf eine horizontale Einstellung des Schwingungsisolationssystems verzichtet werden.

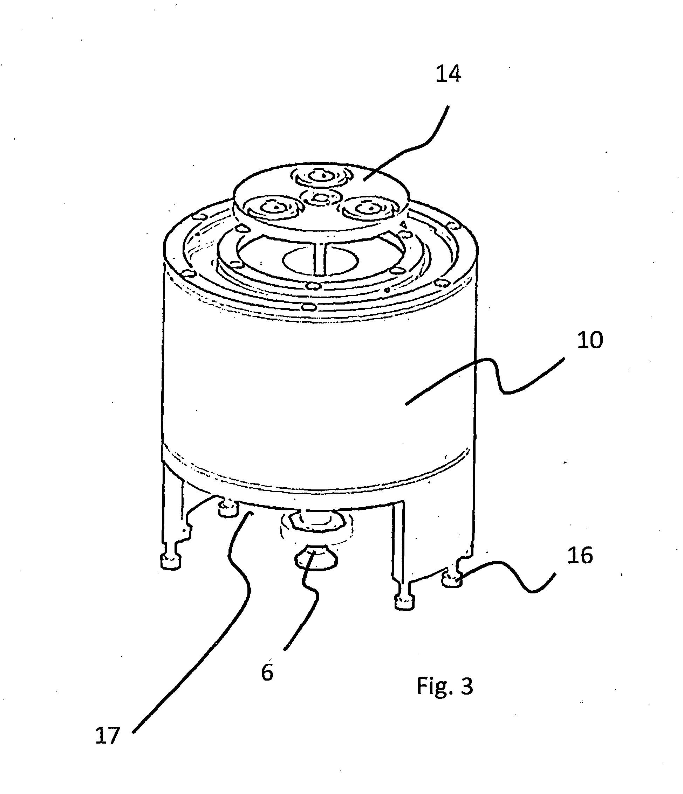

Fig. 3 zeigt eine perspektivische Ansicht des Außengehäuses 10 eines Schwingungsisolators.

Zu erkennen ist auf der oberen Seite das in diesem Ausführungsbeispiel plattenförmig ausgebildete Befestigungselement 14, mittels dessen der Isolator mit der schwingungsisoliert gelagerten Last gekoppelt wird.

Das Außengehäuse 10 wird mittels der in diesem Ausführungsbeispiel als Schrauben ausgebildeten Befestigungsmittel 16 auf der Basis (nicht dargestellt) befestigt. Weiter wird der untere Federteller (nicht zu erkennen) mittels des Befestigungselements 6 ebenfalls mit der Basis verbunden.

Es versteht sich, dass der gesamte Aufbau auch genau umgekehrt ausgebildet sein kann, dass also die Ankopplung des Außengehäuses und des unteren Federtellers an die zu isolierende Last erfolgt. Vorzugsweise ist aber die Schraubenfeder steif an die Basis angebunden.

Das zylindrisch ausgebildete Außengehäuse 10 umfasst des Weiteren zumindest eine Aussparung 17, über die das Stellelement zugänglich ist.

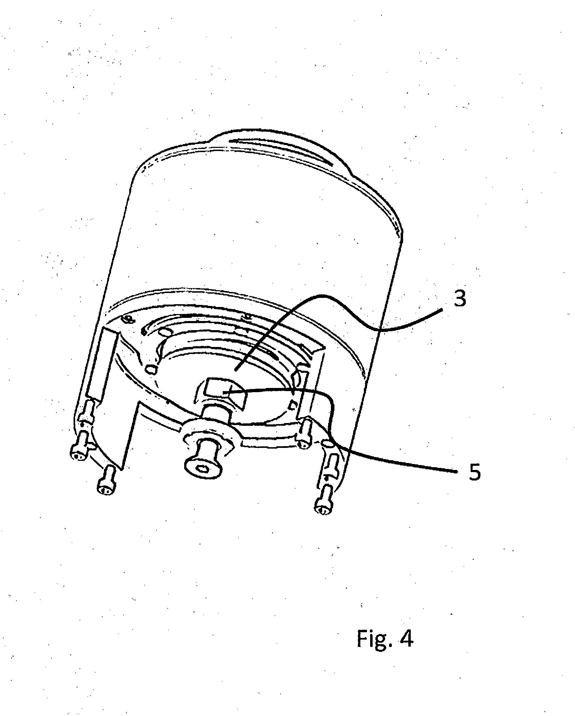

Dies ist besonders gut in der perspektivischen Ansicht gemäß Fig. 4 zu erkennen.

Zu sehen ist insbesondere das als Mutter ausgebildete Stellelement 5, mittels dessen der untere Federteller 3 und damit auch die schwingungsisoliert gelagerte Last (nicht dargestellt) in ihrer Höhe verstellt werden kann.

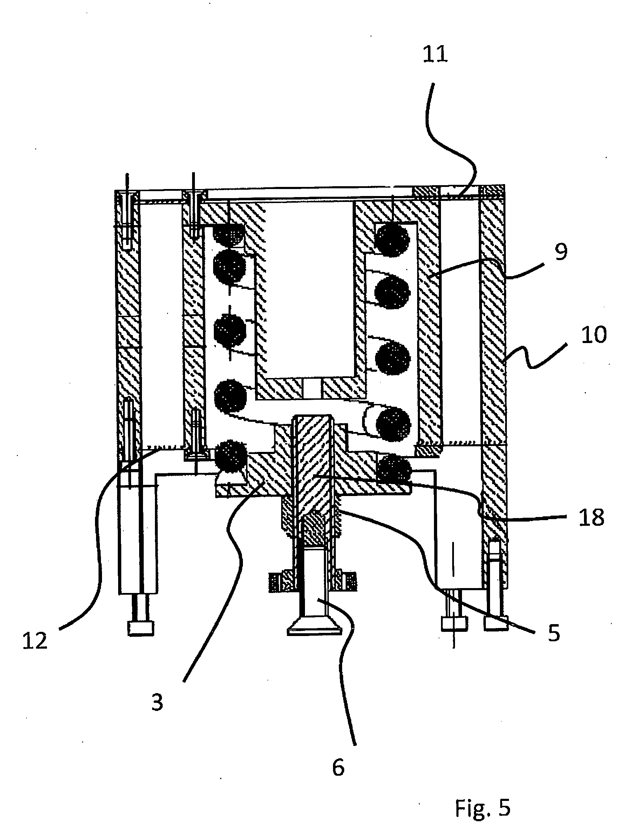

Fig. 5 zeigt eine weitere Schnittansicht von Komponenten eines Schwingungsisolators.

Zu erkennen ist hier insbesondere das innere Gehäuse 9, welches über die voneinander beabstandeten oberen 11 und unteren Blattfedern 12 mit dem Außengehäuse 10 derart verbunden ist, dass Innen- und Außengehäuse nur in vertikaler Richtung gegeneinander beweglich sind.

Weiter zu erkennen ist das als Mutter ausgebildete Stellelement 5, welches auf einem Gewindestab 18 sitzt und über das so der untere Federteller 3 in seiner Höhe verstellt werden kann.

Der Gewindestab wird mittels des in diesem Ausführungsbeispiel als Schraube unteren Befestigungselementes 6 mit der Basis verbunden.

Durch die Erfindung konnte auf einfache Weise ein sehr wirksamer mechanischer Schwingungsisolator mit einer Schraubenfeder bereit gestellt werden, welcher eine Höhenverstellung ermöglicht, ohne dass es zur Verschiebung der schwingungsisoliert gelagerten Last in einer horizontalen Richtung kommt.

### Bezugszeichenliste

- 1.: Schwingungsisolator
- 2.: Schraubenfeder
- 3.: unterer Federteller
- 4.: oberer Federteller
- 5.: Stellelement
- 6.: Unteres Befestigungselement
- 7.: Basis
- 8.: zu isolierende Last
- 9.: Gehäuse
- 10.: Außengehäuse
- 11.: obere Blattfeder
- 12.: untere Blattfeder
- 13.: Biegestab
- 14.: Oberes Befestigungselement
- 15.: Verlängerung
- 16.: Befestigungsmittel
- 17.: Aussparung
- 18.: Gewindestab
- 19.: Aktor

## Patentansprüche

1. Schwingungsisolator (1), umfassend eine Basis (7), auf der eine zu isolierende Last (8) über eine in einer vertikalen Richtung wirksame Schraubenfeder (2) schwingungsisoliert gelagert ist, wobei der Schwingungsisolator (1) über ein Stellelement (5) höhenverstellbar ausgebildet ist,
**dadurch gekennzeichnet, dass** die Schraubenfeder (2) in einer horizontalen Richtung steif an die Basis (7) oder an die zu isolierende Last (8) angebunden ist, und dass der Schwingungsisolator ein weiteres Bauelement zur Bereitstellung einer horizontalen Schwingungsisolation umfasst, mittels dessen die Schraubenfeder (2) mit der Basis (7) oder der zu isolierenden Last (8) verbunden ist.

2. Schwingungsisolator nach dem vorstehenden Anspruch, **dadurch gekennzeichnet, dass** der Schwingungsisolator das weitere Bauelement zur Bereitstellung einer horizontalen Schwingungsisolation als Biegestab (13) ausgebildet ist.

3. Schwingungsisolator nach dem vorstehenden Anspruch, **dadurch gekennzeichnet, dass** der Biegestab (13) an einer in die Schraubenfeder (2) hineinragenden Verlängerung (15) befestigt ist.

4. Schwingungsisolator nach einem der vorstehenden Ansprüche, **dadurch gekennzeichnet, dass** die Schraubenfeder (2) mittels zumindest einer Blattfeder (11,12) in einer horizontalen Richtung steif an die Basis (7) oder die zu isolierende Last (8) angebunden ist.

5. Schwingungsisolator nach dem vorstehenden Anspruch, **dadurch gekennzeichnet, dass** die Schraubenfeder (2) mittels zumindest zwei in einer horizontalen Richtung voneinander beabstandeten Blattfedern (11,12) steif an die Basis (7) oder die zu isolierende Last (8) angebunden ist.

6. Schwingungsisolator nach einem der vorstehenden Ansprüche, **dadurch gekennzeichnet, dass** die Schraubenfeder (2) in einem Gehäuse (9) angeordnet ist.

7. Schwingungsisolator nach dem vorstehenden Anspruch, **dadurch gekennzeichnet, dass** das Gehäuse (9) einen Federteller (4) umfasst.

8. Schwingungsisolator nach einem der beiden vorstehenden Ansprüche, **dadurch gekennzeichnet, dass** das Gehäuse (9) in einer horizontalen Richtung steif an ein Außengehäuse (10) angebunden ist, wobei das Außengehäuse (10) mit der Basis (7) oder der zu isolierenden Last (8) verbunden ist.

9. Schwingungsisolator nach dem vorstehenden Anspruch, **dadurch gekennzeichnet, dass** das Außengehäuse (10) zumindest einen Aussparung (17) umfasst, über die das Stellelement (5) zugänglich ist.

10. Schwingungsisolator nach einem der vorstehenden Ansprüche, **dadurch gekennzeichnet, dass** das Stellelement (5) zur Höhenverstellung einen Gewindestab (18) umfasst.

11. Schwingungsisolator nach einem der vorstehenden Ansprüche, **dadurch gekennzeichnet, dass** das Stellelement (5) einen höhenverstellbaren Federteller (3) umfasst.

12. Schwingungsisolationssystem, umfassend zumindest einen Schwingungsisolator (1) nach einem der vorstehenden Ansprüche.

13. Schwingungsisolationssystem nach dem vorstehenden Anspruch, umfassend zumindest einen Sensor zur Erfassung von Schwingungen sowie zumindest einen Aktor (19) zur aktiven Schwingungsisolation.

14. Schwingungsisolationssystem nach dem vorstehenden Anspruch, **dadurch gekennzeichnet, dass** der Aktor (19) als linearer Magnetaktor ausgebildet ist.

15. Schwingungsisolationssystem nach dem vorstehenden Anspruch, **dadurch gekennzeichnet, dass** der Magnetaktor eine Tauchspule umfasst, welche zwischen Magnete umfassenden Flügeln angeordnet ist.

## Claims

1. A vibration isolator (1), comprising a base (7) on which a load to be isolated (8) is anti-vibration mounted by means of a coil spring (2) that is effective in a vertical direction, the vibration isolator (1) being adjustable in height by an adjusting element (5); **characterized in that**, in a horizontal direction the coil spring (2) is rigidly connected to the base (7) or to the load to be isolated (8),
and **in that** the vibration isolator comprises a further component for providing horizontal vibration isolation through which the coil spring (2) is coupled with the base (7) or the load to be isolated (8).

2. The vibration isolator as claimed in the preceding claim, **characterized in that** the further component for providing horizontal vibration isolation is embodies as a flexible rod (13).

3. The vibration isolator as claimed in the preceding claim, **characterized in that** the flexible rod (13) is attached to an extension (15) protruding into the coil spring (2).

4. The vibration isolator as claimed in any of the preceding claims, **characterized in that** in a horizontal direction the coil spring (2) is rigidly connected to the base (7) or to the load to be isolated (8) by means of at least one leaf spring (11, 12).

5. The vibration isolator as claimed in the preceding claim, **characterized in that** in a horizontal direction the coil spring (2) is rigidly connected to the base (7) or to the load to be isolated (8) by means of at least two leaf springs (11, 12) spaced from each other.

6. The vibration isolator as claimed in any of the preceding claims, **characterized in that** the coil spring (2) is disposed in a housing (9).

7. The vibration isolator as claimed in the preceding claim, **characterized in that** the housing (9) comprises a spring plate (4).

8. The vibration isolator as claimed in any of the two preceding claims, **characterized in that** in a horizontal direction the housing (9) is rigidly connected to an outer housing (10), the outer housing (10) being coupled to the base (7) or to the load to be isolated (8).

9. The vibration isolator as claimed in the preceding claim, **characterized in that** the outer housing (10) comprises at least one recess (17) through which the adjusting element (5) is accessible.

10. The vibration isolator as claimed in any of the preceding claims, **characterized in that** the adjusting element (5) comprises a threaded rod (18) for height adjustment.

11. The vibration isolator as claimed in any of the preceding claims, **characterized in that** the adjusting element (5) comprises a spring plate (3) that is adjustable in height.

12. A vibration isolation system, comprising at least one vibration isolator (1) as claimed in any of the preceding claims.

13. The vibration isolation system as claimed in the preceding claim, comprising at least one sensor for detecting vibrations, and at least one actuator (19) for active vibration isolation.

14. The vibration isolation system as claimed in the preceding claim, **characterized in that** the actuator (19) is a linear magnetic actuator.

15. The vibration isolation system as claimed in the preceding claim, **characterized in that** the magnetic actuator comprises a plunger coil which is arranged between blades that include magnets.

## Revendications

1. Isolateur de vibrations (1), comportant une base (7) sur laquelle une charge à isoler (8) est montée de manière à être isolée contre les vibrations au moyen d'un ressort hélicoïdal (2) agissant dans la direction verticale, ledit isolateur de vibrations (1) étant réalisé de manière à être réglable en hauteur au moyen d'un élément de réglage (5), **caractérisé en ce que** le ressort hélicoïdal (2) est raccordé de manière rigide à la base (7) ou à la charge à isoler (8) dans la direction horizontale, et **en ce que** ledit isolateur de vibrations comprend un autre composant pour l'obtention d'une isolation horizontale contre les vibrations, au moyen duquel le ressort hélicoïdal (2) est raccordé à la base (7) ou à la charge à isoler (8).

2. Isolateur de vibrations selon la revendication précédente, **caractérisé en ce que** l'autre composant pour l'obtention d'une isolation horizontale contre les vibrations est réalisé comme tige de flexion (13).

3. Isolateur de vibrations selon la revendication précédente, **caractérisé en ce que** la tige de flexion (13) est fixée contre une extension (15) pénétrant dans le ressort hélicoïdal (2).

4. Isolateur de vibrations selon l'une des revendications précédentes, **caractérisé en ce que** le ressort hélicoïdal (2) est raccordé de manière rigide à la base (7) ou à la charge à isoler (8) par au moins un ressort à lame (11, 12) dans la direction horizontale.

5. Isolateur de vibrations selon la revendication précédente, **caractérisé en ce que** le ressort hélicoïdal (2) est raccordé de manière rigide à la base (7) ou à la charge à isoler (8) par au moins deux ressorts à lame (11, 12) espacés l'un de l'autre dans la direction horizontale.

6. Isolateur de vibrations selon l'une des revendications précédentes, **caractérisé en ce que** le ressort hélicoïdal (2) est disposé dans un boîtier (9).

7. Isolateur de vibrations selon la revendication précédente, **caractérisé en ce que** le boîtier (9) comprend une coupelle de ressort (4).

8. Isolateur de vibrations selon l'une des deux revendications précédentes, **caractérisé en ce que** le boîtier (9) est raccordé de manière rigide à un boîtier extérieur (10) dans la direction horizontale, ledit boîtier extérieur (10) étant raccordé à la base (7) ou à la charge à isoler (8).

9. Isolateur de vibrations selon la revendication précédente, **caractérisé en ce que** le boîtier extérieur (10) présente au moins un évidement (17) rendant accessible l'élément de réglage (5).

10. Isolateur de vibrations selon l'une des revendications précédentes, **caractérisé en ce que** l'élément de réglage (5) pour le réglage en hauteur comprend une tige filetée (18).

11. Isolateur de vibrations selon l'une des revendications précédentes, **caractérisé en ce que** l'élément de réglage (5) comprend une coupelle de ressort (3) réglable en hauteur.

12. Système d'isolation contre les vibrations, comprenant au moins un isolateur de vibrations (1) selon l'une des revendications précédentes.

13. Système d'isolation contre les vibrations selon la revendication précédente, comprenant au moins un capteur pour la détection de vibrations ainsi qu'au moins un actionneur (19) pour une isolation active contre les vibrations.

14. Système d'isolation contre les vibrations selon la revendication précédente, **caractérisé en ce que** l'actionneur (19) est réalisé comme actionneur magnétique linéaire.

15. Système d'isolation contre les vibrations selon la revendication précédente, **caractérisé en ce que** l'actionneur magnétique comprend une bobine mobile disposée entre des ailettes contenant des aimants.
